# EUROPEAN PATENT APPLICATION

(11) **EP 2 750 261 A1**
(43) Date of publication of application: **02.07.2014**
(21) Application number: 13182364.3
(22) Date of filing: 30.08.2013
(51) Int. Cl.: H02J 9/00

(54) **Electronic Device and Control Method Thereof**

(30) Priority: 23.11.2012 KR 20120133522
(71) Applicant: Samsung Electronics Co., Ltd, Gyeonggi-do 443-742 (KR)
(72) Inventor: Kim, In-beom, Seoul (KR)
(74) Representative: Walaski, Jan Filip

(57) **Abstract**

An electronic device and a control method thereof includes an infrared module which receives an infrared control signal having a predetermined section-specific waveform from an infrared transmitter, a switching unit which turns on/off the infrared module, and a controller which controls the switching unit to alternately turn on and off the infrared module in a predetermined cycle for recognizing the predetermined section-specific waveform of the infrared control signal. Thus, electric power consumed by an infrared module in a standby mode may be reduced while receiving a signal of an infrared transmitter.

## Description

The present invention relates to an electronic device and a control method thereof, and more particularly to an electronic device which can reduce electric power consumed by an infrared module in a standby mode, and a control method thereof.

In general, an electronic device consumes electric power in a standby mode.

For example, when the electronic device includes an infrared module to receive a signal from an infrared transmitter, the electronic device consumes electric power to receive a signal of the infrared transmitter in the standby mode.

If the electric power consumed in such an infrared module is reduced, it is possible to reduce standby power consumption of the whole electronic device.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

One or more exemplary embodiments may provide an electronic device and a control method thereof, in which electric power consumed by an infrared module in a standby mode while receiving a signal of an infrared transmitter may be reduced.

One or more exemplary embodiments may provide an electronic device that may include: an infrared module which may receive an infrared control signal having a predetermined section-specific waveform from an infrared transmitter; a switching unit which may turn on/off the infrared module; and a controller which may control the switching unit to alternately turn on and off the infrared module in a predetermined cycle for recognizing the predetermined section-specific waveform of the infrared control signal.

The controller may control the switching unit so that the infrared module can be turned off for a half of a time corresponding to the predetermined section-specific waveform of the infrared control signal.

The controller may control the switching unit so that the infrared module can be turned on more than at least twice within time corresponding to the predetermined section specific waveform of the infrared control signal.

The infrared module may include an auto gain controller (AGC), and the electronic apparatus may further include a dummy resistor parallel-connected to the switching unit and allowing the auto gain controller to operate continuously while the infrared module is turned off by way of the auto gain controller.

The infrared module may consume an electric current of 300µA or less in a standby mode of the electronic device.

The dummy resistor may have resistance of 500kΩ ∼ 3MΩ.

The switching module may include a transistor, and the transistor may be connected to a ground terminal of the infrared module.

The controller may include a microcomputer.

A control pin may be allocated to the microcomputer, and the control pin may be connected to a gate terminal of the transistor.

If the infrared module receives the predetermined section-specific waveform of the infrared control signal while being continuously twice turned on, the microcomputer may maintain an awake mode.

One or more exemplary embodiments may provide a method of controlling the electronic device, in which the method may include: turning on/off an infrared module in a predetermined cycle for recognizing a predetermined section-specific waveform of an infrared control signal; receiving the infrared signal having the predetermined section-specific waveform while the infrared module is turned on; waking a microcomputer up; turning off the infrared module; turning on the infrared module again; and maintaining the microcomputer in an awake mode if receiving the infrared signal having the predetermined section-specific waveform while the infrared module is turned on again.

The turning on/off the infrared module may include turning on/off the infrared module for a half of time corresponding to the predetermined section-specific waveform of the infrared control signal.

The turning on/off the infrared module may include turning on/off the infrared module more than at least twice within a time corresponding to the predetermined section-specific waveform of the infrared control signal.

The infrared module may include an auto gain controller (AGC), and a dummy resistor parallel-connected to the switching unit may be further provided to allow the auto gain controller to operate continuously while the infrared module is turned off by way of the auto gain controller.

The infrared module may consume an electric current of 300µA or less in a standby mode of the electronic device.

The dummy resistor may have resistance of 500kΩ ∼ 3MΩ.

The switching module may include a transistor, and the transistor may be connected to a ground terminal of the infrared module.

The controller may include a microcomputer.

A control pin may be allocated to the microcomputer, and the control pin may be connected to a gate terminal of the transistor.

If the infrared module receives the predetermined section-specific waveform of the infrared control signal while being continuously twice turned on, the microcomputer may maintain an awake mode.

The above and/or other aspects will become apparent and more readily appreciated from the following description of exemplary embodiments, taken in conjunction with the accompanying drawings, in which:
FIG. 1 is a block diagram of an electronic device including an infrared module according to one or more exemplary embodiments;
FIG. 2 is a block diagram showing an internal configuration of an infrared module according to one or more embodiments, such as the infrared module of FIG. 1;
FIG. 3 shows waveforms of a signal from an infrared transmitter, driving of an infrared module and driving of a microcomputer, according to one or more exemplary embodiments; and
FIG. 4 is a flowchart for explaining a control method of an electronic device according to one or more exemplary embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

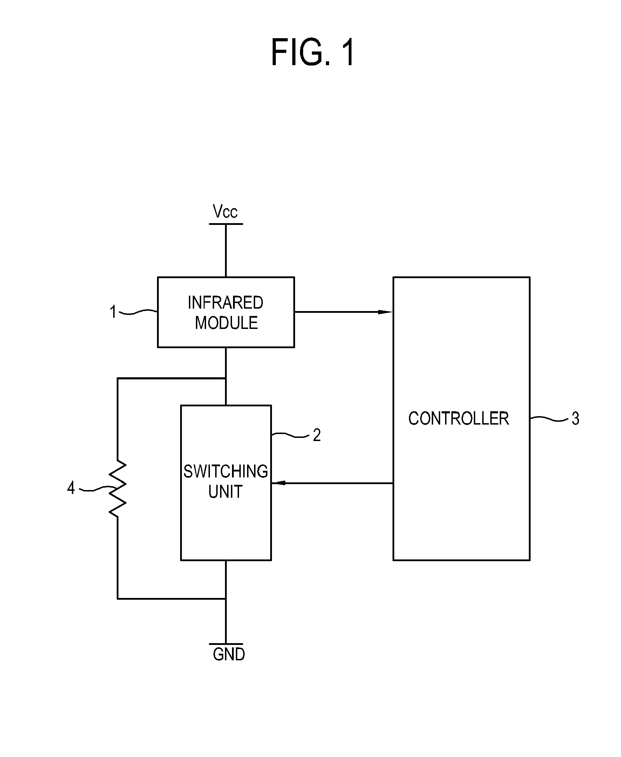

FIG. 1 is a block diagram of an electronic device including an infrared module according to one or more exemplary embodiments.

An electronic device according to one or more exemplary embodiments may include an infrared module 1 which may receive an infrared control signal having a specific waveform in a predetermined section from an infrared transmitter, a switching unit 2 which may turn on/off the infrared module, and a controller 3 which may control the switching unit to repetitively turn on/off the infrared module for a predetermined period so that a predetermined section-specific waveform of the infrared control signal may be recognized.

Here, there is no limit to the electronic device as long as it can receive and operate in response to a control signal from the infrared transmitter. As an example of the electronic device, it may include a television (TV) or the like.

Also, the infrared transmitter may include a device such as a remote controller that may transmit an infrared ray.

The infrared module 1 may receive an infrared ray from the infrared transmitter, and may include, for example, three terminals for outputting signals to input power: Vcc, ground GND, and a microcomputer (not shown). In standby mode, electric power is supplied between the input power Vcc and the ground GND so that the infrared module 1 can operate. For example, even in standby mode, a voltage of 3.3V may be applied between the input power Vcc and the ground GND.

The infrared module 1 may consume an electric current of 300µA if it is continuously turned on in the standby mode. According to one or more exemplary embodiments, the infrared module 2 may be configured to consume an electric current of 300µA or less, for example, 150µA under on/off control.

For example, to make the standby power consumption of the electronic device be equal to or lower than 1.5mWatt, an electric current of 300µA or less must be consumed with respect to a voltage of 5V. According to one or more exemplary embodiments, it may be possible to reduce the consumption of the electric current by turning on/off the infrared module 1 such that that the infrared module 1 may be turned on in the standby mode and may consume an electric current of at least 300µA.

For the on/off control, an electronic device according to one or more exemplary embodiments may include the switching unit 2 that may turn on/off the infrared module 1.

The switching unit 2 may turn on/off the infrared module 1 in a predetermined cycle under the control of the controller 3. Here, the predetermined cycle for turning on/off the infrared module 1 may be determined to recognize a predetermined section-specific waveform of the infrared control signal.

Specifically, a control signal of a general infrared transmitter may include a lead code, a custom code and a data code.

The lead code is to distinguish between a signal of the infrared transmitter or noise, which is generally transmitted through a frequency of 38KHz. The infrared module 1 may recognize not noise but a signal from the infrared transmitter when at least six pulses among pulses of the lead code are received, and may output the signal. Meanwhile, the custom code may be a signal containing information about, for example, a manufacturer, a model name, etc. of the electronic device to be controlled by the control signal of the infrared transmitter, and the data code may be a signal containing, for example, information about specific control such as volume up/down, channel switching, etc.

Therefore, the infrared module 1 may receive six or more pulses among the pulses of the lead code when turned on by the switching unit 2. If the section where the infrared module 1 is turned on is shorter than time corresponding to six pulses of the lead code, a control signal may not be recognized and there may be no output even though the control signal may be normally received from the infrared transmitter.

To avoid this problem, the infrared module may be always turned on and operate by elongating the lead code among the signals of the infrared transmitter, or transmitting the same signal more than twice. However, such a method belongs to a method of making the infrared transmitter using a new communication manner, or does not operate normally if it is applied to the existing infrared transmitter.

According to one or more exemplary embodiments, it may be possible to reduce the electric power consumed by the infrared module in the standby mode while receiving the signal from the infrared transmitter.

According to one or more exemplary embodiments, the controller 3 may include a microcomputer. The microcomputer additionally may allocate separate control pins in order to control the switching unit 2. The control pins of the microcomputer may be connected to the switching unit 2 connecting with the ground terminal of the infrared module 1, i.e., a gate terminal of a transistor.

The controller 3 may control the switching unit 2 to repetitively turn on/off in an optimum cycle to recognize a predetermined section-specific waveform of the infrared control signal, i.e., to recognize the lead code.

For example, the controller 3 may control the switching unit 2 to turn off the infrared module 1 for a time corresponding to the lead code of the infrared control signal, for example, for half of 4.5msec. In this case, as compared with the electric current consumption of the infrared module being continuously turned on, for example, consuming at least 300µA, the electric current consumption may be reduced in half to thereby consume, for example, an electric current of 150µA.

Also, the controller 3 may control the switching unit2 so that the infrared module 1 may be turned on at least twice within the time corresponding to the lead code of the infrared control signal, for example, within 4.5msec. Thus, it may be possible to prevent a normal infrared control signal from being missed while distinguishing noise.

As described above, the switching unit 2 may be added and controlled by the microcomputer in order to reduce the electric power consumed by the infrared module 1 in the standby mode while receiving a signal from the infrared transmitter, thereby possibly turning off the infrared module 1 for time except the time that may be optimized to recognize the infrared control signal of the infrared transmitter the infrared module 1 and thus possibly reducing the power consumption in proportion to the time during which the infrared module 1 is turned off.

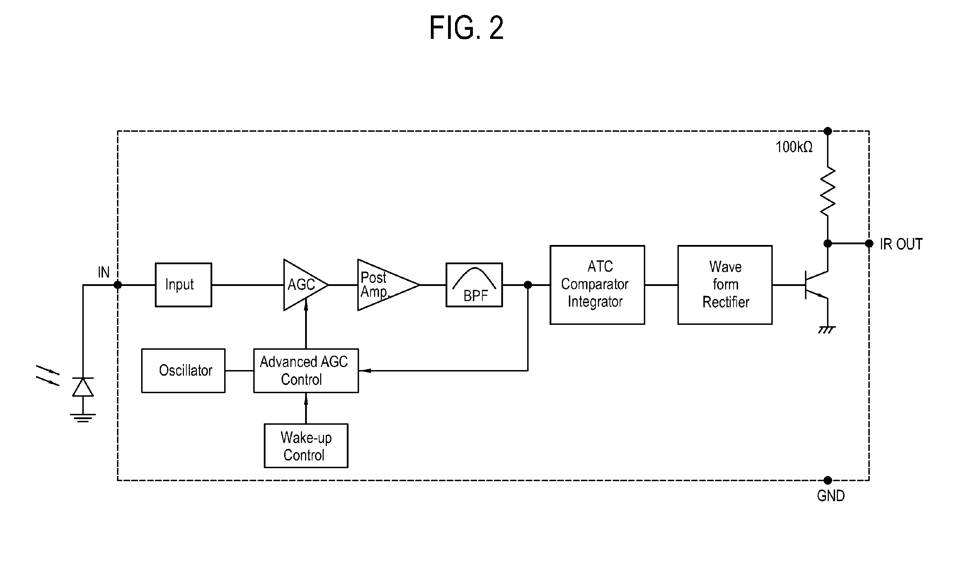

FIG. 2 is a block diagram showing an internal configuration of an infrared module according to one or more embodiments, such as the infrared module 1 of FIG. 1.

Referring to FIG. 2, the infrared module 1 internally may include an auto gain controller (AGC) 21.

As described above, as the infrared module 1 may be alternately turned and off, the electric power supplied to the internal auto gain controller (AGC) may also be alternately supplied and cut off.

The auto gain controller (AGC) 21 may need an initialization time before it operates normally if the electric power is cut off and then supplied again. For example, until the auto gain controller (AGC) 21 is completely initialized and then stabilized, the infrared module 1 may mistake disturbance light such as, for example, an infrared ray of a three wavelength lamp for a control signal from the infrared transmitter and may output an undesired output, or may determine the normal control signal of the infrared transmitter as noise.

According to one or more exemplary embodiments, a dummy resistor 4 may be parallel-connected to both ends of the switching unit 2 so as to possibly prevent the infrared module 1 from such malfunction. Thus, even though the switching unit 2 may be open, a predetermined electric current may be supplied to the auto gain controller (AGC) 21 through the dummy resistor. That is, the auto gain controller (AGC) 21 may operate continuously regardless of the on/off switching of the infrared module 1.

The dummy resistor 4 may have, for example, resistance of 500kΩ ∼ 3MΩ. Specifically, the dummy resistor 4 may have, for example, resistance of 2MΩ. Through the dummy resistor 4, a weak current needed for the auto gain controller (AGC) 21 may flow.

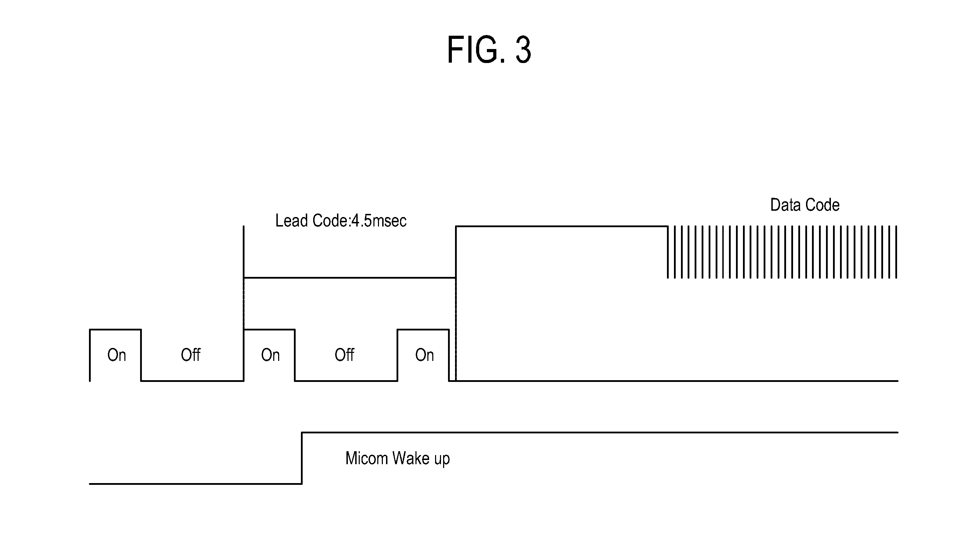

FIG. 3 shows waveforms of a signal from an infrared transmitter, driving of the infrared module and driving of a microcomputer, according to one or more exemplary embodiments.

Referring to FIG. 3, the top waveform shows a signal of the infrared transmitter such as a remote controller, the middle waveform shows on/off driving of the infrared module 1, and the bottom waveform shows driving of the microcomputer.

As shown in FIG. 3, while the microcomputer 3 is in a sleep mode, the infrared module 1 may be alternately turned on/off in a predetermined cycle. If the lead code of the remote controller is received while the infrared module 1 may be turned on, and the microcomputer may be awakened from the sleep mode. Then, the infrared module 1 may be turned off by the switching unit 2 so as to reduce consumed electric current, and turned on again. If the lead code has still been received when the infrared module 1 is turned on again, the microcomputer may maintain an awake mode. On the other hand, if the lead code is not received any more when the infrared module 1 is turned on again, the microcomputer may return to the sleep mode.

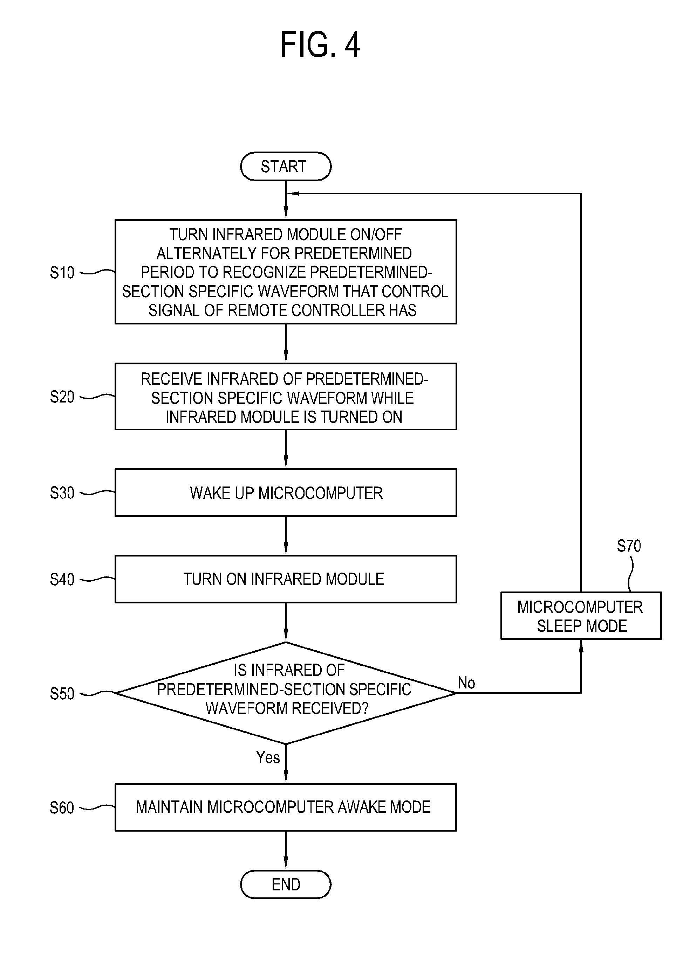

FIG. 4 is a flowchart for explaining a control method of an electronic device according to one or more exemplary embodiments.

First, the infrared module 1 may be turned on/off in a predetermined cycle to recognize the infrared control signal having a predetermined section-specific waveform (S10).

If the infrared module 1 receives the infrared signal having a predetermined section-specific waveform while being turned on (S20), the microcomputer may awaken from sleep mode (S30).

To possibly reduce the current consumption of the infrared module 1, the infrared module 1 may be turned off and turned on again for the foregoing cycle (period) (S40).

When the infrared module 1 is turned on again (S40), if the infrared signal having a predetermined section-specific waveform is still received (Yes of S50), the microcomputer may maintain an awake mode (S60). On the other hand, when the infrared module 1 is turned on again (S40), if the infrared signal having a predetermined section-specific waveform is not received any more (No of S50), the microcomputer may return to the sleep mode (S70).

As described above, to possibly reduce electric power consumed by the infrared module 1 in the standby mode while receiving a signal from the infrared transmitter, a switching unit 2 may be added to control the microcomputer so that the infrared module 1 may be turned off for a time except a time of recognizing the infrared control signal of the infrared transmitter, thereby possibly reducing the power consumption in proportion to a time during which the infrared module 1 is turned off.

Also, even though the infrared module 1 may be turned off by the switching unit 2, the electric power may be continuously supplied through the dummy resistor 4 so that an auto gain controller (AGC) 21 that may be provided in the infrared module 1 and that may require an initialization time until having a stable operation, thereby possibly normally and stably receiving the control signal from the infrared transmitter even though the infrared module 1 is turned off.

According to an exemplary embodiment, there are provided an electronic device and a control method thereof, in which electric power consumed by an infrared module in a standby mode may be reduced while receiving a signal of an infrared transmitter.

In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include magnetic media such as hard disks, floppy disks, and magnetic tape, optical media such as CD ROM disks and DVDs, magneto-optical media such as optical disks, and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims.

## Claims

1. An electronic device comprising:
an infrared module which receives an infrared control signal having a predetermined section-specific waveform from an infrared transmitter;
a switching unit which turns the infrared module on and off; and
a controller which controls the switching unit to alternately turn the infrared module on and off in a predetermined cycle for recognizing the predetermined section-specific waveform of the infrared control signal.

2. The electronic apparatus according to claim 1, wherein the controller controls the switching unit so that the infrared module is turned off for approximately a half of a time corresponding to the predetermined section-specific waveform of the infrared control signal.

3. The electronic apparatus according to claim 1 or 2, wherein the controller controls the switching unit so that the infrared module is turned on at least twice within the time corresponding to the predetermined section-specific waveform of the infrared control signal.

4. The electronic apparatus according to any one of the preceding claims, wherein the infrared module comprises an auto gain controller AGC, and
the electronic apparatus further comprises a dummy resistor connected in parallel with the switching unit and allowing the auto gain controller AGC to operate continuously while the infrared module is turned off.

5. The electronic apparatus according to any one of the preceding claims, wherein the infrared module consumes an electric current of approximately 300µA or less in a standby mode of the electronic device.

6. The electronic apparatus according to claim 4, wherein the dummy resistor has resistance of approximately 500 kΩ ∼ 3MΩ.

7. The electronic apparatus according to any one of the preceding claims, wherein the switching module comprises a transistor connected to a ground terminal of the infrared module.

8. The electronic apparatus according to claim 7, wherein the controller comprises a microcomputer.

9. The electronic apparatus according to claim 8, wherein a control pin is allocated to the microcomputer, and the control pin is connected to a gate terminal of the transistor.

10. The electronic apparatus according to claim 9, wherein if the infrared module receives the predetermined section-specific waveform of the infrared control signal twice while being twice turned on, the microcomputer maintains an awake mode.

11. A method of controlling an electronic device, the method comprising:
turning on an infrared module a first time;
receiving an infrared signal having a predetermined section-specific waveform while the infrared module is turned on the first time;
turning off the infrared module;
turning on the infrared module a second time; and
maintaining a microcomputer in an awake mode if the infrared signal is received while the infrared module is turned on the second time.

12. The method according to claim 11, the method further comprising:
turning the infrared module on and off in a predetermined cycle for recognizing a predetermined section specific-waveform of an infrared control signal; and
waking up a microcomputer,
wherein the microcomputer is maintained in the awake mode if the infrared module receives the infrared signal having the predetermined section-specific waveform while the infrared module is turned on the second time.

13. The method according to claim 11 or 12, wherein the turning on/off the infrared module comprises turning off the infrared module for approximately a half of a time corresponding to the predetermined section-specific waveform of the infrared control signal.

14. The method according to any one of claims 11 to 13, wherein the turning on/off the infrared module comprises turning on the infrared module at least twice within the time corresponding to the predetermined section-specific waveform of the infrared control signal.

15. The method according to any one of claims 11 to 14, wherein the infrared module comprises an auto gain controller AGC, and
a dummy resistor is connected in parallel with the switching unit to allow the auto gain controller to operate continuously while the infrared module is turned off.
